# EUROPEAN PATENT APPLICATION

(11) **EP 2 262 234 A1**
(43) Date of publication of application: **15.12.2010**
(21) Application number: 10005694.4
(22) Date of filing: 01.06.2010
(51) Int. Cl.: H04N 5/445, H04N 7/025, G06F 17/00

(54) **Broadcasting receiver and method for providing information in the same**

(30) Priority: 02.06.2009 KR 20090048492
(71) Applicant: Humax Co., Ltd., Seongnam-si, Gyeonggi-do 463-825 (KR)
(72) Inventor: Choi, Kiho, Gyeonggi-do 463-720 (KR)
(74) Representative: Wagner, Bernhard Peter

(57) **Abstract**

In a broadcasting receiver according to one implementation of this document, a method for providing information comprises displaying items to be included in a menu by arranging the items based on preference information managed by the broadcasting receiver; and, if a predetermined item is selected from the displayed menu, displaying sub-items to be included in a menu associated with the selected item by arranging the items based on the preference information or displaying a program list associated with the selected item. The preference information can comprise information categorized into multiple steps, information at each step can comprise more than one item, and each item of information at each step can store the number of reproduction of the program related to the corresponding item in an associated manner. Based on the number of reproduction, display order of items to be included in the corresponding menu can be changed.

## Description

This application claims priority of Patent Application No. 10-2009- 0048492 filed in Republic of Korea on June 2, 2009 the entire contents of which are hereby incorporated by reference.

### BACKGROUND

### Field

This document relates to a method for effectively providing a menu in a broadcasting receiver.

### Related Art

Digital television (D-TV) or set-top box (STB) is in wide use now for receiving various types of digital broadcasting such as terrestrial digital broadcasting, satellite digital broadcasting, and cable digital broadcasting.

Recently, IP broadcasting, such as a video on demand (VOD) service providing programs of various contents through the Internet, has been commercialized. Along with the commercialization of IP broadcasting, IP television (IP-TV) or IP set-top box (IP-STB) equipped with a network module is also in wide use to receive the IP broadcasting.

A broadcasting receiver such as the IP-TV or the IP-STB detects EPG (Electronic Program Guide) information included in broadcasting signals transmitted through the Internet and displays a menu screen capable of user interface.

Also, a contents providing server providing the IP broadcasting provides a menu screen capable of user interface by making use of category information (e.g., movie, drama, and sports) or genre information (e.g., action, drama, and comedy).

Accordingly, the user, by selecting an item included in the menu screen, can watch a contents program of his or her preferred category and/or genre.

However, there is a large number of broadcasting channels in the IP broadcasting. And since the number of programs is increasing remarkably, it is getting more difficult for the user to select a program of his or her preference quickly and easily.

### SUMMARY

An aspect of this document is to provide a method for providing a menu with which the user can select a program of his or her preference easily.

A method for providing information in a broadcasting receiver according to one implementation of this document may comprise displaying items to be included in a menu by arranging the items based on preference information managed by a broadcasting receiver; and, if a predetermined item is selected from the displayed menu, displaying sub-items to be included in a menu associated with a selected item by arranging the items based on the preference information or displaying a program list associated with the selected item.

A broadcasting receiver according to another implementation of this document may comprise a communication unit configured to communicate with a server through a network; a reproduction unit configured to reproduce a program transmitted from the server through the communication unit; a storage unit configured to store preference information according to reproduction of the program; a menu generation unit configured to generate or edit a menu screen; and a controller configured to control the menu generation unit to arrange items to be included in a menu for the user to select a program based on the preference information and, when a program provided by the server is reproduced, update the preference information with reference to supplementary information of the reproduced program.

In one implementation, if a program provided by a contents providing server is reproduced, the method can further comprise updating the preference information with reference to supplementary information of the corresponding program. If reproduction of the program is completed or lasts more than a predetermined time, information associated with the corresponding program can be added to the preference information.

In one implementation, the preference information can comprise information categorized into multiple steps and information at each step can comprise more than one item. Each item of information at each step can store the number of reproduction of a program related to the item in an associated manner. The preference information can be categorized in order of category, genre, and detailed item information.

In one implementation, if reproduction of a program is completed or lasts more than a predetermined time, the number of reproduction is accumulated and updated in the respective items associated with the program. Also, based on the number of reproduction contained in the preference information, display order of items to be included in the corresponding menu can be changed.

A method for providing broadcasting information according to another implementation of this document may comprise receiving a request of a user selection menu from a broadcasting receiver connected through a network; composing the menu by changing display order of items to be included in the requested menu based on preference information associated with the broadcasting receiver; and providing the composed menu to the broadcasting receiver.

In one embodiment, the preference information can comprise information categorized into multiple steps and information at each step comprises more than one item. Each item of information at each step can store the number of reproduction of a program related to the corresponding item in an associated manner.

In one embodiment, if the broadcasting receiver completes reproduction of a program or continues reproduction thereof more than a predetermined time, the number of reproduction of each item associated with the corresponding program can be accumulated and updated based on supplementary information of the corresponding program.

In one embodiment, the preference information can be managed by either the broadcasting receiver or a server providing broadcasting programs.

Accordingly, the user can select a program of his or her preference more easily.

### BRIEF DESCRIPTION OF THE DRAWINGS

The implementation of this document will be described in detail with reference to the following drawings in which like numerals refer to like elements.

FIG. 1 illustrates a connection of IP-STB to which this document is applied;

FIG. 2 illustrates a block diagram of IP-STB according to one implementation of this document;

FIG. 3 illustrates structure of user preference information according to one implementation of this document;

FIG. 4 illustrates a flow diagram of a method for providing information in a broadcasting receiver according to one implementation of this document;

FIG. 5 illustrates a user interface menu screen according to one implementation of this document; and

FIGS. 6 and 7 illustrate a user preference item screen according to one implementation of this document.

### DETAILED DESCRIPTION

Hereinafter, an implementation of a method for providing information in a broadcasting receiver according to this document will be described in detail with reference to the attached drawings.

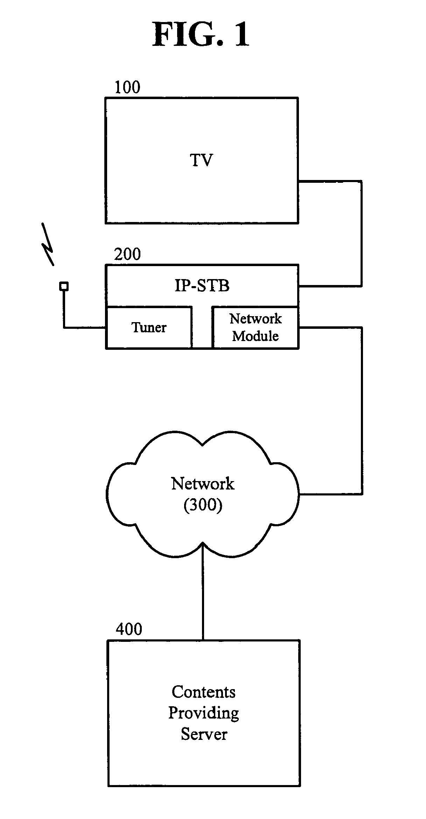

This document can be applied to various types of broadcasting receivers comprising IP-TV and IP-STB which can receive broadcasting programs provided through a network such as IP broadcasting. As shown in FIG. 1, the IP-STB 200 comprises a network module for receiving desired broadcasting data through bilateral communication with a contents providing server 400 connected through a network. In addition, the IP-STB 200 can further comprise a tuner for receiving terrestrial digital broadcasting.

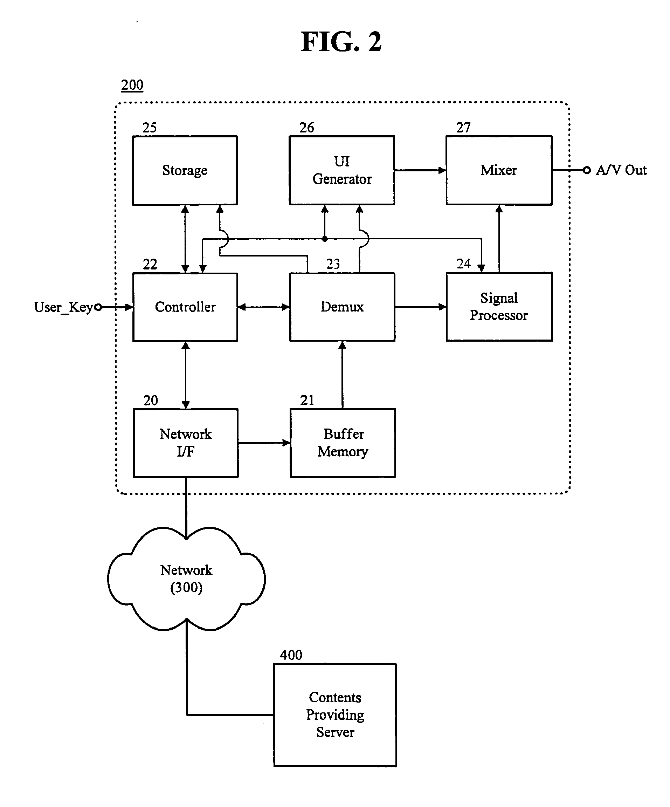

As shown in FIG. 2, the IP-STB 200 can comprise a network module 20, buffer memory 21 for storing transmitted data temporarily, a controller 22, a demux 23 for separating A/V data and meta data from broadcasting data, a signal processing unit 24 for decoding A/V data, a storage 25 for storing A/V data, a UI generator 26 for generating a menu screen with which a user can select a desired item or input a command, and a mixer 27 for combining a menu screen edited or generated by the UI generator 26 and an image screen processed by the signal processing unit 24.

The storage 25 can use either a massive storage medium such as a hard disk drive (HDD) or non-volatile memory comprising flash memory and EEPROM.

The controller 22 analyzes supplementary information (e.g., meta data) of a program which the user has watched and updates user preference information managed in the storage 25 as a database.

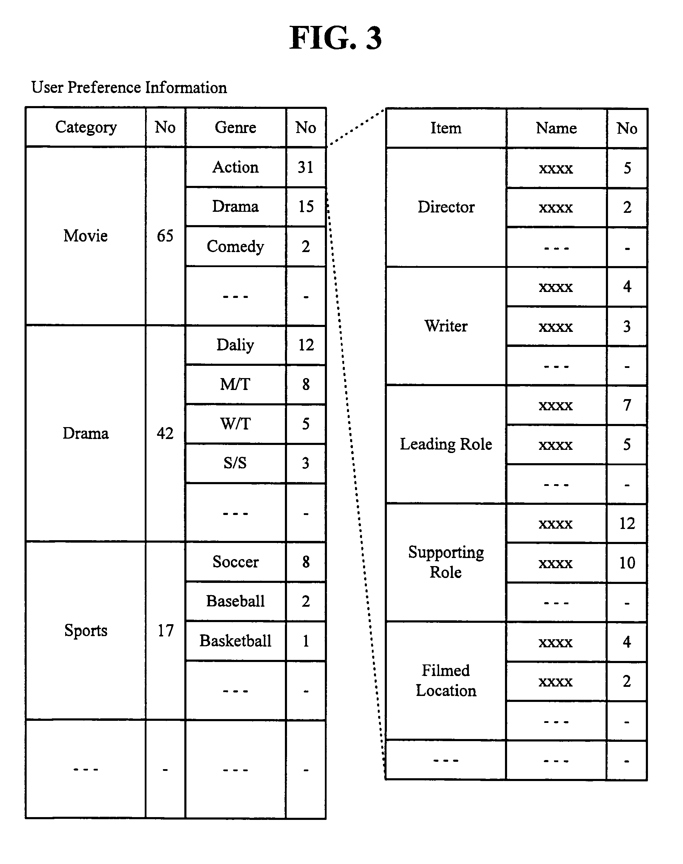

The user preference information, as shown in FIG. 3, comprises category information of each program (e.g., movie, drama, and sports) and genre information can be recorded in association with each category. For example, in the movie category, genre information such as action, drama, and comedy can be recorded; in the drama category, genre information such as daily drama, Monday/Tuesday drama, Wednesday/Thursday drama, and Saturday/Sunday drama; and in the sports category, genre information such as soccer, baseball, and basketball.

The user preference information can record detailed item for each genre. As shown in FIG. 3, in the action genre of the movie category, recorded are various detailed items such as director, writer, leading role, supporting role, and filmed location of the corresponding program. Also, in the soccer genre of the sports category, detailed items such as a coach and players of the corresponding soccer team can be recorded.

In other words, user preference information can be managed by being categorized into multiple steps, for example in order of category information, genre information, and detailed item information. Each step comprises a plurality of items; each item of the corresponding step can have a lower step comprising a plurality of detailed items. For example, a category information step comprises various categories of movie, drama, sports, and the like; a genre step which is a lower step of the movie category comprises action, drama, comedy, and the like; and detailed item step which is a lower step of the action genre item comprises a plurality of detailed items such as director, writer, leading role, supporting role, filmed location, and the like.

The category information, genre information, and detailed item information can be recorded in association with number information indicating how many times the corresponding program has been watched. The number information is used to determine display priority of the corresponding item and can be accumulated and updated by the controller 22.

When a user interface menu screen provided by a contents providing server connected through the network module 20 is displayed, the controller 22, based on user preference information managed in the storage 25, changes priorities of items included in the menu screen and displays the items according to changed priorities. Therefore, a user can easily select a program based on his or her preferred category, genre, and detailed item. In what follows, more detailed description of the above will be given.

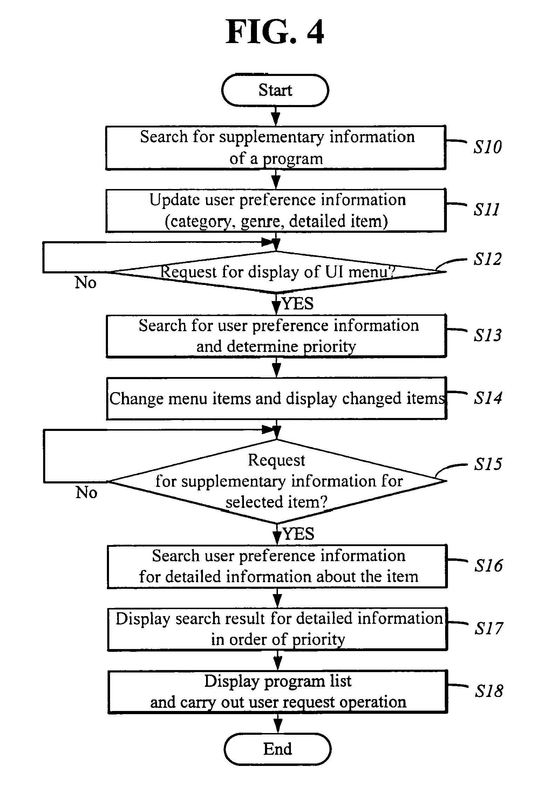

FIG. 4 illustrates a flow diagram of a method for providing information according to one implementation of this document.

The controller 22, according to the user's request, interfaces with the contents providing server 400 and carries out an operation for receiving IP broadcasting by downloading or streaming arbitrary content or a program.

The controller 22, after completing reproduction of the program or reproducing the program more than a predetermined time (e.g., 10 minutes) by carrying out the operation for receiving IP broadcasting, determines the program as having been watched by the user and analyzes meta data or supplementary information about the program S10.

For example, the controller 22, before reproducing the program, temporarily stores in the storage 25 supplementary information of the corresponding program provided from the contents providing server 400. If the corresponding program is determined as having been watched by the user, supplementary information of the temporarily stored contents program is checked. On the other hand, the controller 22, if the corresponding program is determined as having been watched by the user, interfaces immediately with the contents providing server 400; and requests, receives, and checks supplementary information about the corresponding program. The controller 22, based on the checked supplementary information, updates user preference information stored in the storage 25, S11.

If, for example, the category of the program is movie and the genre thereof is action, as shown in FIG. 3, the controller 22 increases number information of movie category included in user preference information by one and at the same time, increases number information of action genre by one.

Also, the controller 22 updates detailed item information included in the action genre of the movie category. For example, the controller 22 checks supplementary information about director, writer, leading role, supporting role, filmed location, and the like; and increases number information of the corresponding detailed item information by one.

If detailed item information checked by the supplementary information is found new to user preference information (for instance, if a new filmed location is checked), the new filmed location is additionally recorded in the detailed item of filmed location and number information is recorded as one.

The controller 22, while managing the user preference information within the storage 25, if display of a user interface menu is requested S12, searches the user preference information and determines priorities of items to be displayed in a menu screen S13.

Meanwhile, if the contents providing server 400 provides graphic background data to compose a user interface menu screen or text data about the respective items, the controller 22 controls the UI generator 26 according to the determined priorities, thereby positioning the item most watched by the user in the first place of a menu screen.

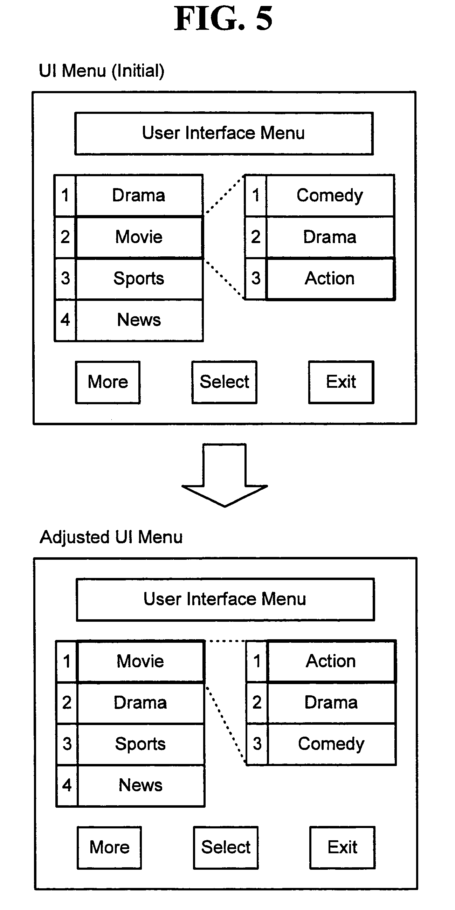

As illustrated in FIG. 5, the controller 22, by controlling the UI generator 26, adjusts the initial user interface menu screen according to user preference information managed as shown in FIG. 3, where the initial user interface menu screen originally displays category items in the order of drama, movie, sports, and news. The controller 22 now displays category items in the order of movie, drama, sports, and news, S14.

Also, the controller 22, if the user selects a movie category, refers to user preference information and displays genre items within movie category in the order of action, drama, and comedy, as shown in FIG. 5.

While items in the user interface menu screen are displayed in a changed state as described above, if the user specifies a particular item and requests additional information about the item S15, the controller 22 searches the user preference information for detailed information about the specified item S16.

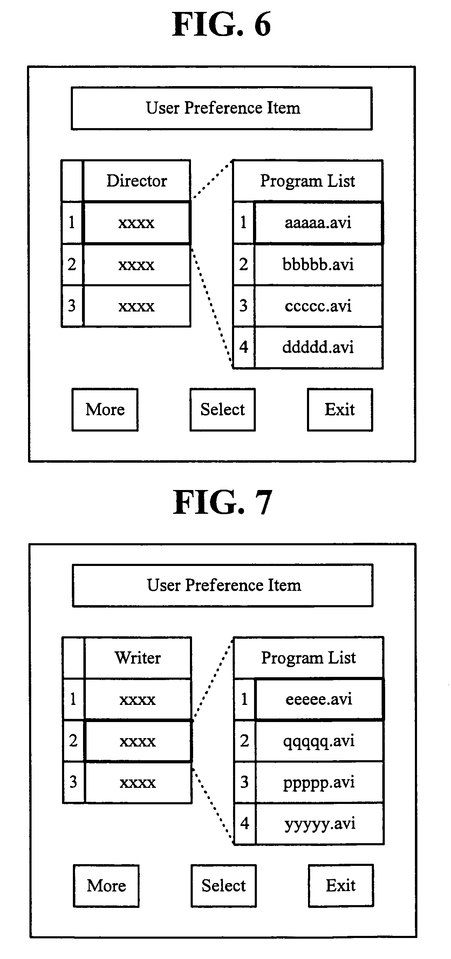

For example, as shown in FIG. 6, if the user selects action genre of a movie category and further selects detailed item of a director included in the action genre, the controller 22 starts to display directors' names found in user preference information according to the descending order of priority S17.

If a director is selected, the controller 22, through interfacing with the contents providing server 400, requests and receives a list (e.g., a program list) of action movies made by the selected director; and displays the list in the form of a menu screen suitable for the user's selection.

As shown in FIG. 7, if the user selects action genre of a movie category and further selects detailed item of a writer included in the action genre, the controller 22 starts to display writers' names found in user preference information according to the descending order of priority.

If a writer is selected, the controller 22, through interfacing with the contents providing server 400, receives a program list of action movies written by the selected writer; and displays the list in a menu screen.

Also, the controller 22, if a program is selected by the user from a program list displayed in a menu screen as described above, through interfacing with the contents providing server 400, carries out a user request operation of downloading or streaming and reproducing the selected program S18.

Meanwhile, as another implementation of this document, the controller 22, after transmitting priority of items determined by the user preference information to the contents providing server, can request the contents providing server to provide a user interface menu screen corresponding to the transmitted priority.

The contents providing server 400 itself can compose and provide a user interface menu screen corresponding to the priority. In this case, system load on the contents providing server is increased in some part; however, UI generator 26 can be removed from the broadcasting receiver.

In a yet another implementation of this document, the contents providing server 400, rather than store user preference information inside a broadcasting receiver, manages the user preference information for each user in a database thereof and composes and provides a user interface menu screen corresponding to the individual user's preference. In this case, the broadcasting receiver doesn't need to store and manage user preference information separately.

In other words, the contents providing server 400, when receiving a request for a user interface menu from a broadcasting receiver connected through a network, can compose a requested menu by changing display order of the items to be included in the corresponding menu based on user preference information associated with the corresponding broadcasting receiver and provide the corresponding menu to the broadcasting receiver which requested the menu.

For example, if a broadcasting receiver requests a menu for category information, the contents providing server 400, based on the corresponding user preference information either provided by the broadcasting receiver or managed internally by the contents providing server's own database, can compose a menu by changing display order with which such items to be included in category information as movie, sports, news, and the like are displayed in the corresponding menu and provide the changed menu to the broadcasting receiver.

Next, if a movie item is selected from a menu screen of a broadcasting receiver about category information, the contents providing server 400 composes a menu about genre information belonging to a movie item. To be specific, the contents providing server 400, based on the corresponding user preference information, can compose a genre menu by changing display order of such items included in movie genre information as comedy, drama, action, and the like; and provide the genre menu to the broadcasting receiver.

The foregoing description of a preferred implementation of the invention has been presented for purposes of illustration. Thus, those skilled in the art may utilize the invention and various implementations with improvements, modifications, substitutions, or additions within the spirit and scope of the invention as defined by the following appended claims.

## Claims

1. A method for providing information in a broadcasting receiver, comprising:
displaying items to be included in a menu by arranging the items based on preference information managed by a broadcasting receiver; and
if a predetermined item is selected from the displayed menu, displaying sub-items to be included in a menu associated with the selected item by arranging the sub-items based on the preference information or displaying a program list associated with the selected item.

2. The method of claim 1, further comprising, if a program provided by a contents providing server is reproduced, updating the preference information with reference to supplementary information of the corresponding program.

3. The method of claim 2, wherein if reproduction of the program is completed or lasts more than a predetermined time, information associated with the corresponding program is added to the preference information.

4. The method of claim 1, wherein the preference information comprises information categorized into multiple steps and information at each step comprises more than one item, each item of information at each step storing a number of reproduction of a program related to the corresponding item in an associated manner.

5. The method of claim 4, wherein if reproduction of a program is completed or lasts more than a predetermined time, a number of reproduction is accumulated and updated in respective items associated with the program.

6. The method of claim 4, wherein the displaying sub-items comprises searching the preference information for the number of reproduction and changing display order of items to be included in the corresponding menu based on the search result.

7. The method of claim 4, wherein the preference information is categorized in order of category, genre, and detailed item information.

8. A method for providing broadcasting information, comprising:
receiving a request of a user selection menu from a broadcasting receiver connected through a network;
composing the menu by changing display order of items to be included in the requested menu based on preference information associated with the broadcasting receiver; and
providing the composed menu to the broadcasting receiver.

9. The method of claim 8, wherein the preference information comprises information categorized into multiple steps and information at each step comprises more than one item, each item of information at each step storing a number of reproduction of a program related to the item in an associated manner.

10. The method of claim 8, wherein if the broadcasting receiver completes reproduction of a program or continues reproduction thereof more than a predetermined time, the number of reproduction of each item associated with the corresponding program is accumulated and updated based on supplementary information of the corresponding program,.

11. The method of claim 8, wherein the preference information is managed by the broadcasting receiver or a server providing broadcasting programs.

12. A broadcasting receiver, comprising:
a communication unit configured to communicate with a server through a network;
a reproduction means configured to reproduce a program transmitted from the server through the communication unit;
a storage unit configured to store preference information according to reproduction of programs;
a menu generation unit configured to generate or edit a menu screen; and
a controller configured to control the menu generation unit to arrange items to be included in a menu for a user to select a program based on the preference information and, when a program provided by the server is reproduced, update the preference information with reference to supplementary information of the reproduced program.

13. The broadcasting receiver of claim 12, wherein the preference information comprises information categorized into multiple steps and information at each step comprises more than one item and the controller is configured to store, in each item of information at each step, a number of reproduction of a program related to the corresponding item in an associated manner.

14. The broadcasting receiver of claim 13, wherein the controller, if reproduction of a program is completed or lasts more than a predetermined time, accumulates and updates the number of reproduction of each item associated with the corresponding program.

15. The broadcasting receiver of claim 13, wherein the controller is configured to search the preference information for the number of reproduction and control the menu generation unit to display order of items to be included in the corresponding menu based on the search result.
